# EUROPEAN PATENT APPLICATION

(11) **EP 4 567 704 A1**
(43) Date of publication of application: **11.06.2025**
(21) Application number: 24214229.7
(22) Date of filing: 20.11.2024
(51) Int. Cl.: G06Q 20/32

(54) **PAYMENT METHODS, APPARATUSES, AND DEVICES**

(30) Priority: 29.11.2023 CN 202311617464
(71) Applicant: ALIPAY.COM CO., LTD., Shanghai 200120 (CN)
(72) Inventor: SHEN, Zhihua, Shanghai 200120 (CN)
(74) Representative: Winter, Brandl - Partnerschaft mbB

(57) **Abstract**

Embodiments of this specification disclose payment methods, apparatuses, and devices. The solution includes: receiving a wake-up instruction, where a manner of initiating the wake-up instruction includes: reading, by a mobile device in which the client is located, a short-range wireless communication tag of a payee to obtain a corresponding code value, sending the wake-up instruction to the client, and providing the code value; obtaining related information of the payee based on the code value in response to the wake-up instruction; in a case in which current payment belongs to large payment, triggering, based on the related information, a server of the payment application to obtain a dynamic code of the payee and performing corresponding large payment processing based on the dynamic code of the payee; and receiving a payment result returned by the server.

## Description

### TECHNICAL FIELD

This specification relates to the field of electronic payment technologies, and in particular, to payment methods, apparatuses, and devices.

### BACKGROUND

With the development of electronic payment technologies and widespread use of intelligent mobile devices, quick-response code-based payment has become one of main means of payment for small payments in people's daily life, which brings great convenience to both a payer and a payee.

There are mainly two specific user operation manners for quick-response code-based payment. For example, a user acts as a payer and a merchant acts as a payee. In the first manner, the user generates and displays a payment code on a terminal (usually a smartphone) of the user, and the merchant scans the payment code by using a code scanning tool such as a code scanner, so as to implement payment. This manner belongs to a scenario in which a payee performs scanning. In the second manner, the merchant can display (either electronically or physically) a collection code of the merchant, and the user scans the collection code by using a camera of a terminal of the user, so as to implement payment. This manner belongs to a scenario in which a payer performs scanning.

However, as wearable devices represented by smart watches gradually emerge, more and more users pay by using the smart watches. As such, because the smart watch is worn on the wrist, the smart watch can be directly operated by the hand, and it is unnecessary to take a mobile phone out of a pocket or a bag, thereby further improving convenience.

Currently, many smart watches do not have a camera. Therefore, when quick-response code-based payment is made by using the smart watch, because a payment code of a merchant cannot be scanned, the previous second manner cannot be used, and only the previous first manner can be used to display the payment code on the smart watch for the merchant to scan the code. However, in practice, because many small merchants (for example, a store or a merchant) do not have a code scanning tool such as a code scanner, only a collection code of the small merchant is printed and posted for the user to scan to pay, and the previous first manner is not supported. Therefore, in such a scenario of the small merchant, it is difficult for the user to use a wearable device without a camera, such as a smart watch, to make quick-response code-based payment. In addition, currently, the smart watch does not support large payment, and even when a smartphone is used to make large payment based on a quick-response code, the payment is often limited or required user operations are cumbersome.

Based on this, for the scenario of the small merchant, a solution that helps a user conveniently make large payment by using a wearable device is needed.

### SUMMARY

One or more embodiments of this specification provide a payment method, apparatus, and device, and a storage medium, so as to alleviate the following technical problem: A solution that helps a user conveniently make large payment by using a wearable device is needed.

To solve the above-mentioned technical problem, one or more embodiments of this specification are implemented as follows:

One or more embodiments of this specification provide a payment method, applied to a client of a payment application, where the method includes:
receiving a wake-up instruction, where a manner of initiating the wake-up instruction includes: reading, by a mobile device in which the client is located, a short-range wireless communication tag of a payee to obtain a corresponding code value, sending the wake-up instruction to the client, and providing the code value;
obtaining related information of the payee based on the code value in response to the wake-up instruction;
in a case in which current payment belongs to large payment, triggering, based on the related information, a server of the payment application to obtain a dynamic code of the payee and perform corresponding large payment processing based on the dynamic code of the payee; and
receiving a payment result returned by the server.

One or more embodiments of this specification provide a payment apparatus, applied to a client of a payment application, where the apparatus includes:
an instruction receiving module, configured to receive a wake-up instruction, where a manner of initiating the wake-up instruction includes: reading, by a mobile device in which the client is located, a short-range wireless communication tag of a payee to obtain a corresponding code value, sending the wake-up instruction to the client, and providing the code value;
a code value parsing module, configured to: obtain related information of the payee based on the code value in response to the wake-up instruction;
a payment triggering module, configured to: in a case in which current payment belongs to large payment, trigger, based on the related information, a server of the payment application to obtain a dynamic code of the payee and perform corresponding large payment processing based on the dynamic code of the payee; and
a result receiving module, configured to receive a payment result returned by the server.

One or more embodiments of this specification provide a payment device, applied to a client of a payment application, where the device includes:
at least one processor; and
a memory communicatively connected to the at least one processor; where
the memory stores instructions executable by the at least one processor, and the instructions are executed by the at least one processor, to enable the at least one processor to:
receive a wake-up instruction, where a manner of initiating the wake-up instruction includes: reading, by a mobile device in which the client is located, a short-range wireless communication tag of a payee to obtain a corresponding code value, sending the wake-up instruction to the client, and providing the code value;
obtain related information of the payee based on the code value in response to the wake-up instruction;
in a case in which current payment belongs to large payment, trigger, based on the related information, a server of the payment application to obtain a dynamic code of the payee and perform corresponding large payment processing based on the dynamic code of the payee; and
receive a payment result returned by the server.

One or more embodiments of this specification provide a non-volatile computer storage medium that stores computer executable instructions and that is applied to a client of a payment application, and the computer executable instructions are set to:
receive a wake-up instruction, where a manner of initiating the wake-up instruction includes: reading, by a mobile device in which the client is located, a short-range wireless communication tag of a payee to obtain a corresponding code value, sending the wake-up instruction to the client, and providing the code value;
obtain related information of the payee based on the code value in response to the wake-up instruction;
simulate, based on the related information, a predetermined process of scan to pay when the payee acts as a code scanning party; and
initiate a payment request on behalf of the payee to a corresponding server by executing the simulated predetermined process, so as to obtain a payment result returned by the server.

The previous at least one technical solution used in one or more embodiments of this specification can achieve the following beneficial effects: A small merchant conveniently implements payment based on a wearable device by setting a short-range wireless communication tag into which related information (for example, an identity or a code value of a collection code) of the small merchant is written. The user can specifically read the short-range wireless communication tag by using the wearable device, so as to obtain the related information of the small merchant. Further, even if the wearable device of the user does not have a code scanning function, and the small merchant does not have a code scanning tool and does not actually perform code scanning on the user, a server can still be further triggered based on the related information to obtain a dynamic code of a payee and implement large payment based on the dynamic code. An operation requirement on the user in an entire process is very low, great convenience is provided, a risk control requirement related to large payment is further ensured, and leakage of critical information related to large payment is also minimized.

### BRIEF DESCRIPTION OF DRAWINGS

To describe the technical solutions in some embodiments of this specification or in a conventional technology more clearly, the following briefly describes the accompanying drawings needed for describing some embodiments or the conventional technology. Clearly, the accompanying drawings in the following descriptions merely show some embodiments of this specification, and a person of ordinary skill in the art can still derive other drawings from these accompanying drawings without creative efforts.
FIG. 1 is a schematic flowchart illustrating a payment method, according to one or more embodiments of this specification;
FIG. 2 is a schematic flowchart illustrating a solution for obtaining a dynamic code of a payee by a server, according to one or more embodiments of this specification;
FIG. 3 is a schematic flowchart illustrating a solution in which a payer confirms use of a dynamic code to precisely control a service, according to one or more embodiments of this specification;
FIG. 4 is a schematic flowchart illustrating a solution for reliably controlling an actual payment amount, according to one or more embodiments of this specification;
FIG. 5 is a schematic diagram illustrating an application scenario of the method of FIG. 1, according to one or more embodiments of this specification;
FIG. 6 is a schematic flowchart illustrating a solution for making large payment in a segmented scenario in a main scenario shown in FIG. 5, according to one or more embodiments of this specification;
FIG. 7 is a schematic flowchart illustrating a solution for making large payment in another segmented scenario in a main scenario shown in FIG. 5, according to one or more embodiments of this specification;
FIG. 8 is a schematic structural diagram illustrating a payment apparatus, according to one or more embodiments of this specification; and
FIG. 9 is a schematic structural diagram illustrating a payment device, according to one or more embodiments of this specification.

### DESCRIPTION OF EMBODIMENTS

Embodiments of this specification provide a payment method, apparatus, and device, and a storage medium.

To make a person skilled in the art better understand the technical solutions in this specification, the following clearly and comprehensively describes the technical solutions in the implementations of this specification with reference to the accompanying drawings in the implementations of this specification. Clearly, the described implementations are merely some rather than all of the implementations of this specification. All other embodiments obtained by a person of ordinary skill in the art based on the embodiments of this specification without creative efforts shall fall within the protection scope of this specification.

It can be understood from introduction of the background that limited by operating costs, sites, etc., many small merchants do not have a code scanning tool such as a code scanner. Therefore, a payment scenario in which a merchant performs scanning is not supported. However, when a user (that is, a payer) uses a mobile device that does not have a camera or does not have a camera that supports code scanning, it is difficult to implement scanning by the user. Thus, a dilemma is caused. In addition, a current mobile device, especially a smart watch, does not support large payment, thereby causing more inconvenience to the user. To alleviate these problems, an NFC tag is used in combination with a dynamic code of a payee in this specification, so large payment can be conveniently made on a mobile device such as a smart watch. In addition, the solution is further optimized, so as to improve service flexibility from the perspective of the user during large payment, and also enhance mutual trust between a payer and a payee.

The following continues to describe the solutions of this specification in detail based on such a general idea.

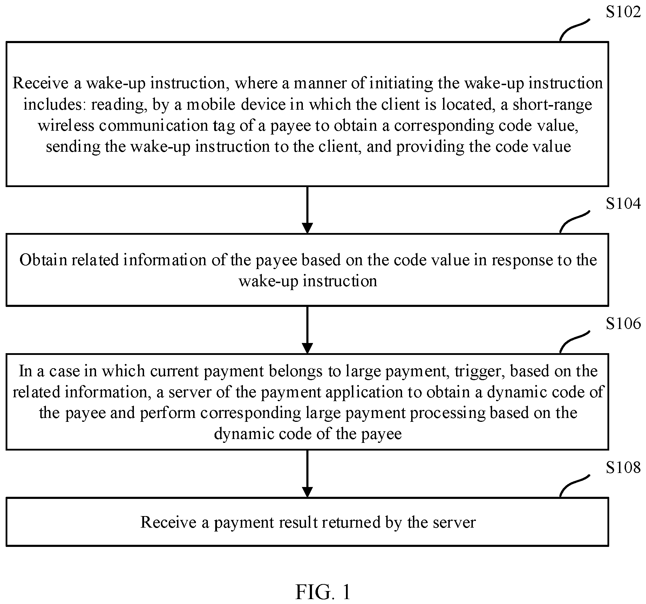

FIG. 1 is a schematic flowchart illustrating a payment method, according to one or more embodiments of this specification. The method can be applied to a client of a payment application, and the client is located on a mobile device. For a mobile device such as a wearable device, especially a wearable device that does not have a camera supporting code scanning, an advantage of the solution can be embodied particularly. The wearable device is represented by a smart watch. In addition, some other wearable devices (for example, a smart band) that can support short-range wireless communication may also use this solution. For ease of description, some of the following embodiments mainly use the smart watch as an example for description.

The process in FIG. 1 includes the following steps:
S 102: Receive a wake-up instruction, where a manner of initiating the wake-up instruction includes: reading, by a mobile device in which the client is located, a short-range wireless communication tag of a payee to obtain a corresponding code value, sending the wake-up instruction to the client, and providing the code value.

In one or more embodiments of this specification, the payee (for example, the previous small merchant) is pre-deployed with a short-range wireless communication tag. Related information of the payee (for example, embodied by a corresponding code value and may not be a plaintext; as such, security is relatively good) is written into the short-range wireless communication tag. Based on the related information, an identity of the payee can be determined (more information, such as authorization information and an amount to be paid, may be determined if necessary), for example, a merchant name or a beneficiary account. A server of a payment application can transfer, based on the identity, payment paid by a payer to the payee.

The related information is, for example, information included in a collection code (currently, usually a quick-response code) of the payee. To facilitate payment in different manners, on the basis of providing a collection code for a user to scan to pay, the payee can be further deployed with a short-range wireless communication tag for use by a payer who is inconvenient or unable to perform code scanning. In this case, for example, a proximity location of the short-range wireless communication tag further displays a collection code of the payee generated based on the code value, and the payer can flexibly select the short-range wireless communication tag or the collection code for interaction based on a device situation of the payer. Specifically, either the code value being first written into the short-range wireless communication tag or the collection code being first generated based on the code value is possible, and advance preparation for each of the two manners can be done independently of the other.

In one or more embodiments of this specification, because many mobile devices support a near field communication (NFC) function, and a cost of an NFC tag is relatively low, the NFC tag can be used as a short-range wireless communication tag. In this case, short-range wireless communication is specifically near field communication.

In one or more embodiments of this specification, when the payer needs to pay, the payer can reach out and bring a smart watch the payer is wearing close to the short-range wireless communication tag of the payee, and a corresponding short-range wireless communication module within the smart watch reads the code value contained in the short-range wireless communication tag. The client of the payment application on the smart watch can be waken by using a microprocessor or a related module in the smart watch, and the code value read by the short-range wireless communication module can be provided to the client of the payment application. This process is easy to operate for the payer, and if the payer wishes, it may even be possible to operate without interacting with the display of the smart watch, providing better experience.

S104: Obtain related information of the payee based on the code value in response to the wake-up instruction.

In one or more embodiments of this specification, the code value can be locally parsed on the client, or the client parses the code value by using the server to obtain the related information of the payee. As such, the client is helped to directly understand a current payer, helping improve payment security. Certainly, the code value itself can alternatively be used as the related information of the payee.

S 106: In a case in which current payment belongs to large payment, trigger, based on the related information, a server of the payment application to obtain a dynamic code of the payee (mainly referring to key content included in the dynamic code) and perform corresponding large payment processing based on the dynamic code of the payee.

A payment amount of the current payment can be manually inputted on the client by the payer, or can be read from the short-range wireless communication tag of the payee by using the mobile device in which the client is located. If the payment amount is not less than the specified amount threshold, it can be established that the current payment belongs to large payment.

In one or more embodiments of this specification, in a case of non-large payment, a dynamic code is unable to be used, but a static code is used. Both the dynamic code and the static code here are codes of the payee. In comparison, the static code is fixed or changed only once in a relatively long time, and the dynamic code is dynamically updated based on time or a quantity of payment times. For example, the dynamic code is updated once every 2 minutes, or is updated once in each large payment, etc.

The static code includes the related information of the payee, and can be used to determine a beneficiary account of the payee. In a case in which the static code is used, in step S102, the code value obtained by the mobile device by reading the short-range wireless communication tag of the payee is a static code. The dynamic code can also include the related information of the payee, and can further include data such as a timestamp and a signature. In some special scenarios of the solution of this specification, the dynamic code can further include a personalized extension field, which is described later by using an example.

Currently, a wearable device such as a smart watch does not support large payment. However, in some conventional large payment solutions, payment needs to be triggered again by a payer, or verification is performed again by a payer or a payee by receiving and inputting a verification code. As a result, some services are redundantly executed or user operations are cumbersome. In this specification, these problems are alleviated by using the dynamic code of the payee and controlling a specific intervention occasion of the dynamic code for the server.

In a case in which the payer does not need to perform service steps redundantly, the server can obtain the dynamic code of the payee from the client incidentally under triggering of the client, or obtain the dynamic code without depending on the client. The latter solution can be preferably used to help converge an activity range of the dynamic code, control the dynamic code on the side of a service provider, and improve interaction efficiency. For the payer and the payee, this process is less disturbing or even no disturbing, experience is better, and security and reliability are also higher. In addition, the payer and the payee have personalized means of flexibly controlling a service based on the dynamic code.

For example, assume that the manner of obtaining the dynamic code of the payee from the client incidentally is used. The short-range wireless communication tag can include: the dynamic code of the payee generated or applied for by the payee and dynamically updated and written into the short-range wireless communication tag. The write action can be automatically triggered based on determining whether a valid time of the dynamic code expires, or can be performed immediately when large payment is to occur (for example, the payee determines an amount to be paid, where the amount to be paid belongs to a large amount). If the dynamic code can be applied for from the server or a third party other than the server, for example, the third party is, for example, another merchant system service provider, in this case, the server can also have a cooperation relationship with the merchant system service provider to support use of the dynamic code.

Based on this example, the triggering, based on the related information, a server of the payment application to obtain a dynamic code of the payee and perform corresponding large payment processing based on the dynamic code of the payee can specifically include: determining the dynamic code of the payee based on a result of reading the short-range wireless communication tag; and interacting with the server of the payment application (for example, sending the dynamic code to the server) based on the related information and the dynamic code of the payee, so the server obtains the dynamic code of the payee and performs corresponding large payment processing based on the dynamic code of the payee.

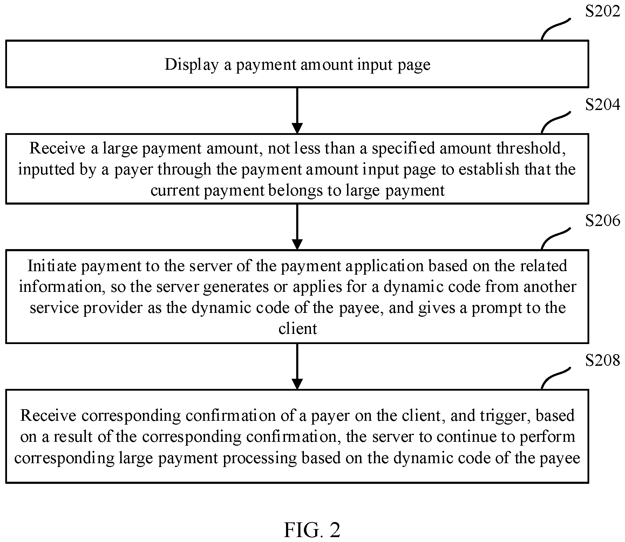

For another example, assume that the manner of obtaining the dynamic code independent of the client is used. Referring to FIG. 2, FIG. 2 is a schematic flowchart illustrating a solution for obtaining a dynamic code of a payee by a server, according to one or more embodiments of this specification.

The solution in FIG. 2 includes the following steps:
S202: Display a payment amount input page.

For example, a payer manually inputs a payment amount here. It is also possible to automatically determine the payment amount without depending on manual input by the payer.

S204: Receive a large payment amount, not less than a specified amount threshold, inputted by a payer through the payment amount input page to establish that the current payment belongs to large payment.

In one or more embodiments of this specification, after the payer inputs the payment amount, it can be determined whether the current payment belongs to large payment. If yes, a related step related to a dynamic code is enabled. In this case, a static code can be written into a short-range wireless communication tag of a payee. After related information of the payee is obtained based on the static code, the payer inputs the payment amount.

In addition, a dynamic code-based payment solution can be used by default. In this case, it is not necessary to explicitly determine whether the current payment belongs to large payment. For example, a dynamic tag can be used as a short-range wireless communication tag, and the dynamic code can be maintained and updated in a timely manner, so a server can more conveniently obtain the dynamic code by directly interacting with a client.

S206: Initiate payment to the server of the payment application based on the related information, so the server generates or applies for a dynamic code from another service provider as the dynamic code of the payee, and gives a prompt to the client.

If the server cannot directly obtain the dynamic code from the client (in this case, the client essentially initiates payment to the server based on the static code), the dynamic code can be generated by itself or applied for from another service provider (such as the previous merchant system service provider of the third party).

In one or more embodiments of this specification, because payment is to be made based on a dynamic code (a code enabled by the server) switched from a static code (a code originally read by the mobile device of the payer based on short-range communication), the payer has a right of knowing. To improve security, the previous prompt can be actively given to the client, so the payer can realize, based on the prompt, that the server needs to perform special processing current time, so as to satisfy a requirement of large payment.

S208: Receive corresponding confirmation of a payer on the client, and trigger, based on a result of the corresponding confirmation, the server to continue to perform corresponding large payment processing based on the dynamic code of the payee.

In one or more embodiments of this specification, the corresponding confirmation can not only indicate that the server is agreed to proceed with a continuous operation based on the dynamic code, but can also allow the payer to incidentally perform more flexible service control accordingly. In this case, the result of the corresponding confirmation can carry a personalized service control field of the payer, so as to perform fine control on a service involved in the current large payment. As such, this helps converge such control permission into some payment transactions (for example, only large payment transactions, which are usually only a small part of payment transactions), so service processing of non-large payment still remains in a light-weight state from the perspective of the payer, so as to avoid unnecessary waste of resources. Therefore, resource configuration is optimized for a payment service provider globally, helping enable resources to play a role more fully and more focused.

In one or more embodiments of this specification, the dynamic code is used through switching, so the server can implement a risk control requirement in a large payment scenario based on the dynamic code, and further the wearable device can also support large payment, for example, sorting and auditing the situation of large inflow of funds to the payee, security guarantee for large outflow of funds from the payer, proactive avoidance of the risk of attacking the static code, and contraction of the time window for exposure of payment-related information.

S 108: Receive a payment result returned by the server.

The server can further notify the payee or another involved third party of the corresponding result.

By using the method in FIG. 1, a small merchant conveniently implements payment based on a wearable device by setting a short-range wireless communication tag into which related information (for example, an identity or a code value of a collection code) of the small merchant is written. The user can specifically read the short-range wireless communication tag by using the wearable device, so as to obtain the related information of the small merchant. Further, even if the wearable device of the user does not have a code scanning function, and the small merchant does not have a code scanning tool and does not actually perform code scanning on the user, a server can still be further triggered based on the related information to obtain a dynamic code of a payee and implement large payment based on the dynamic code. An operation requirement on the user in an entire process is very low, great convenience is provided, a risk control requirement related to large payment is further ensured, and leakage of critical information related to large payment is also minimized.

Based on the method shown in FIG. 1, this specification further provides some specific implementation solutions and extension solutions of the method, which are further described below.

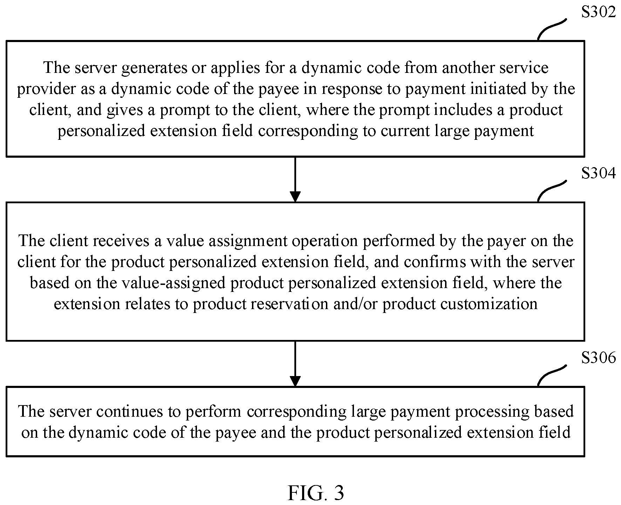

It is mentioned in the previous that introducing a dynamic code can help a payer to perform more flexible service control. To facilitate intuitive understanding, one or more embodiments of this specification provide a schematic flowchart illustrating a solution in which a payer confirms use of a dynamic code to precisely control a service. Refer to FIG. 3.

The process in FIG. 3 includes the following steps:
S302: The server generates or applies for a dynamic code from another service provider as a dynamic code of the payee in response to payment initiated by the client, and gives a prompt to the client, where the prompt includes a product personalized extension field corresponding to current large payment.

The prompt here is mainly used to notify the payer that the dynamic code is to be enabled because current payment is large payment. However, with this interaction action, this specification further provides the payer with a capability of actively controlling a service, that is, by using the personalized service control field mentioned above, for example, which can be specifically a product personalized extension field in this example. Certainly, it can alternatively be another control field used for fine personalization. For example, the control field is used to automatically generate a financial resource (or another capability) voucher based on the current large payment, so as to be directly used in another scenario such as a visa or an endorsement. For example, such a control field is referred to as a capability personalized extension field.

S304: The client receives a value assignment operation performed by the payer on the client for the product personalized extension field, and confirms with the server based on the value-assigned product personalized extension field, where the extension relates to product reservation and/or product customization.

The payer optionally performs a value assignment operation on the product personalized extension field, so the product personalized extension field is effective in the current payment process. In this case, the client receives the value assignment operation performed by the payer on the product personalized extension field, and initiates, to the server based on the value-assigned product personalized extension field, confirmation that carries an additional personalized request.

The product personalized extension field, for example, can be a series product reservation field. If the current payment of the payer is directed to one of a series of products, and a subsequent product is to be exited later, the payer can actively operate the series product reservation field during payment, so the subsequent product can be reserved at the same time as payment. As such, the subsequent product is not easily missed. Further, a product attribute customization field may also be added to the series product reservation field as a product personalized extension field, so as to pre-select, for the series, a product that satisfies a customization condition and that may be subsequently released (it is also possible that a product actually released subsequently does not satisfy a customized attribute, and such product will not hit the reservation of the payer).

As a result, single payment may achieve a longer and richer effect that can bring convenience to the payer and help create different levels and granularities of service processing logic lines for large and non-large payment.

S306: The server continues to perform corresponding large payment processing based on the dynamic code of the payee and the product personalized extension field.

In one or more embodiments of this specification, it can be learned from the previous description that the payer can be allowed to manually input the payment amount, thereby implementing active control by the payer on the payment process. Specifically, for example, a payment amount input page is displayed on the client, so as to receive the payment amount inputted by the payer. The payer can operate on the display of the smart watch and input the payment amount on the payment amount input page. The client initiates, based on the received payment amount, a payment request limited by the payment amount (for example, equal to or less than the payment amount) to a corresponding server. Certainly, whether to perform the step of inputting the payment amount can alternatively be determined by the payer. In a case in which the step is not performed, the payer does not need to operate on the watch display, and the payment process is more concise and smoother, and user experience is better.

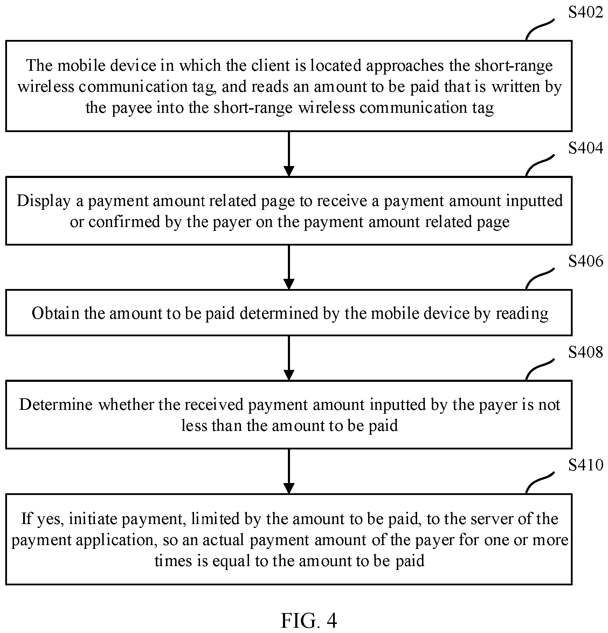

The previous description mainly focuses on enhancing security and trust from the perspective of the payer (user). In practice, to strengthen trust between the payer and the payee, a risk caused by possible abnormality of the payer also needs to be considered. Based on such consideration, one or more embodiments of this specification further provide a schematic flowchart illustrating a solution for reliably controlling an actual payment amount, so as to simultaneously guarantee interests of both the payer and the payee and strengthen trust between the two parties. Referring to FIG. 4, the process can be executed with reference to the process in FIG. 1.

The process in FIG. 4 includes the following steps:
S402: The mobile device in which the client is located approaches the short-range wireless communication tag, and reads an amount to be paid that is written by the payee into the short-range wireless communication tag.

The amount to be paid can be written immediately at current time, or can be written in advance. For the latter manner, for example, a corresponding amount of a corresponding one or more products is written. When reading, the user can select a product or a quantity of products by using the client or manually. In a case in which no additional operation needs to be performed by the user, the latter manner is particularly suitable for a scenario in which the amount to be paid is fixed, for example, selling a single product such as a ticket.

When the previous step of triggering the server of the payment application to obtain the dynamic code of the payee and perform corresponding large payment processing based on the dynamic code of the payee is performed, specifically the following steps can be additionally performed.

S404: Display a payment amount related page to receive a payment amount inputted or confirmed by the payer on the payment amount related page.

The amount to be paid is an amount recognized by the user as the payee, and the payment amount is an amount recognized by the payer. This provides both parties with a means to actively control the amount so as to reach an agreement subsequently.

S406: Obtain the amount to be paid determined by the mobile device by reading.

S408: Determine whether the received payment amount inputted by the payer is not less than the amount to be paid.

If the received payment amount inputted by the payer is equal to the amount to be paid, the two parties have reached an agreement, and payment processing can continue. If the received payment amount inputted by the payer is greater than the amount to be paid, the payment amount may be incorrectly inputted by the payer. In this case, the payer can be prompted correspondingly to perform further check to avoid loss of interest.

S410: If yes, initiate payment, limited by the amount to be paid, to the server of the payment application, so an actual payment amount of the payer for one or more times is equal to the amount to be paid.

If the received payment amount is less than the amount to be paid (which may be caused by an operation error of the payer, or may be caused by an operation error of the payee), the payee may have loss of interest. In this case, the payer can also be prompted to initiate a payment request after correction. Or a payment service of a difference between the payment amount and the amount to be paid can be additionally initiated for the payer. After the payer confirms (for example, simply inquires the payee for confirmation), the payer performs payment processing. The payer makes payment for multiple times, so the payment service in which an operation error of the payer occurs can also be normally split for processing, and the service does not need to be rolled back. Therefore, a risk of misunderstanding and conflict between the two parties is reduced, and an operation error that may occur on the two parties is also more tolerant.

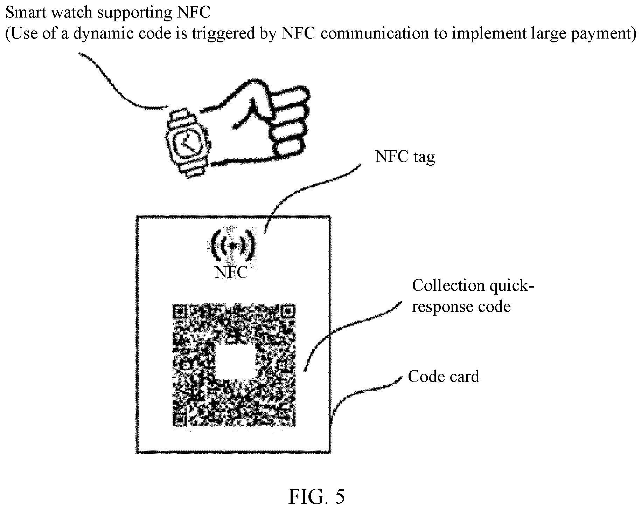

According to the previous description, more intuitively, one or more embodiments of this specification further provide a schematic diagram illustrating an application scenario of the method in FIG. 1. Refer to FIG. 5.

In the application scenario of FIG. 5, a user acts as a payer and a merchant acts as a payee, and the merchant provides a collection quick-response code thereof and provides a corresponding NFC tag for nearby deployment. For example, in a case in which the collection quick-response code is not shielded, the tag is attached to a collection quick-response code card. The user optionally uses a wearable device such as a smart watch to trigger, based on the NFC tag, application of a dynamic code through NFC communication, so as to implement large payment, without a need to depend on the collection quick-response code. Another user without such a wearable device can use a smartphone to scan to pay with the collection quick-response code. In this case, it is not necessary to support large payment or a relatively complex operation needs to be performed by the user to implement large payment.

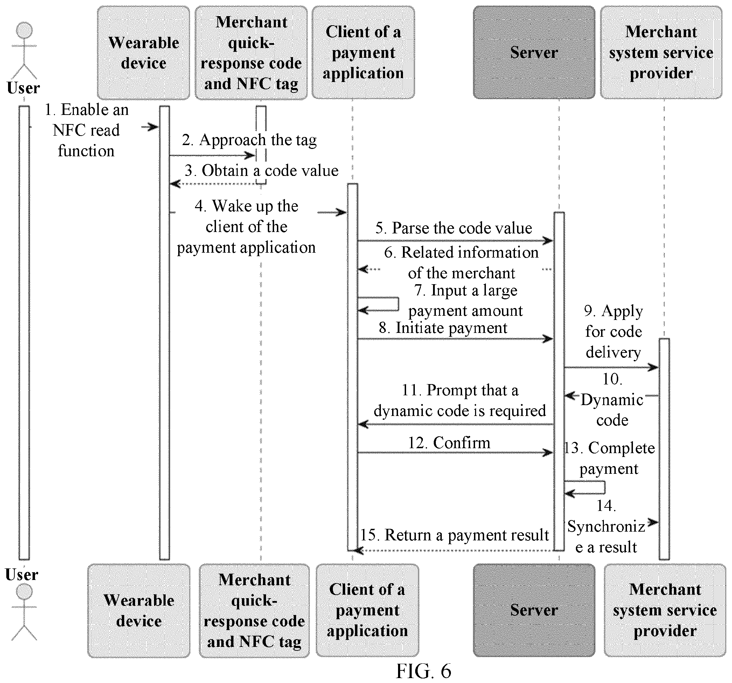

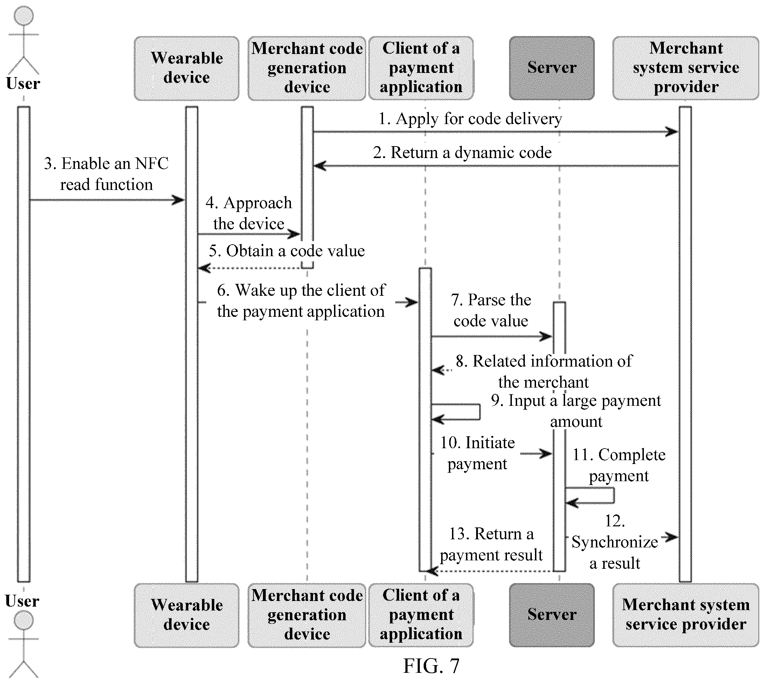

Further, one or more embodiments of this specification further provide schematic flowcharts illustrating solutions for making large payment in a segmented scenario and another segmented scenario in the main scenario in FIG. 5. Refer to FIG. 6 and FIG. 7 respectively. Assume that a wearable device is specifically a smart watch.

In the segmented scenario in FIG. 6, a code pre-written into an NFC tag of a merchant is a static code of the merchant, and a dynamic code is actively obtained by a server and may not be exposed to the side of a client. The process in FIG. 6 includes the following steps:
For a smart watch worn by a user, the user enables an NFC read function in advance, and a client of a payment application is installed on the smart watch.

The user places the smart watch close to the NFC tag of the merchant when needing to make payment during shopping at the merchant.

The smart watch reads a code value (the static code) from the NFC tag of the merchant by using the NFC read function of the smart watch.

The smart watch wakes up the client of the payment application installed on the smart watch, and provides the code value to the client.

The client requests a server of the payment application to parse the code value.

The server parses the code value to obtain related information of the merchant, and returns the related information to the client.

The user inputs a large payment amount on the client, so the client initiates payment to the server accordingly.

If the server determines that a dynamic code needs to be used for current payment, the server applies for code delivery from a merchant system service provider to obtain the dynamic code of the merchant delivered by the merchant system service provider (or the server can be enabled to generate the dynamic code).

The server gives a prompt to the client, so the user learns that the dynamic code is to be used for the current payment.

The client responds to a confirmation operation of the user and sends corresponding feedback to the server.

The server continues to perform large payment processing based on the dynamic code, so as to complete payment, synchronize a payment result to the merchant system service provider, and feed back the payment result to the client.

In the segmented scenario in FIG. 7, the dynamic code of the merchant is directly dynamically written into the NFC tag of the merchant. Therefore, the server does not need to apply for code delivery from the merchant system service provider. The process in FIG. 7 includes the following steps:

A merchant code generation device applies for code delivery from the merchant system service provider to obtain the dynamic code of the merchant delivered by the merchant system service provider. The merchant code generation device supports NFC communication, and the dynamic code is written into an NFC dynamic tag included in the merchant code generation device.

For a smart watch worn by a user, the user enables an NFC read function in advance, and a client of a payment application is installed on the smart watch.

The user places the smart watch close to the merchant code generation device when needing to make payment during shopping at the merchant.

The smart watch reads a code value (the dynamic code) from the merchant code generation device by using the NFC read function of the smart watch.

The smart watch wakes up the client of the payment application installed on the smart watch, and provides the code value to the client.

The client requests a server of the payment application to parse the code value.

The server parses the code value to obtain related information of the merchant, and returns the related information to the client.

The user inputs a large payment amount on the client, so the client initiates payment to the server.

The server continues to perform large payment processing based on the dynamic code, so as to complete payment, synchronize a payment result to the merchant system service provider, and feed back the payment result to the client.

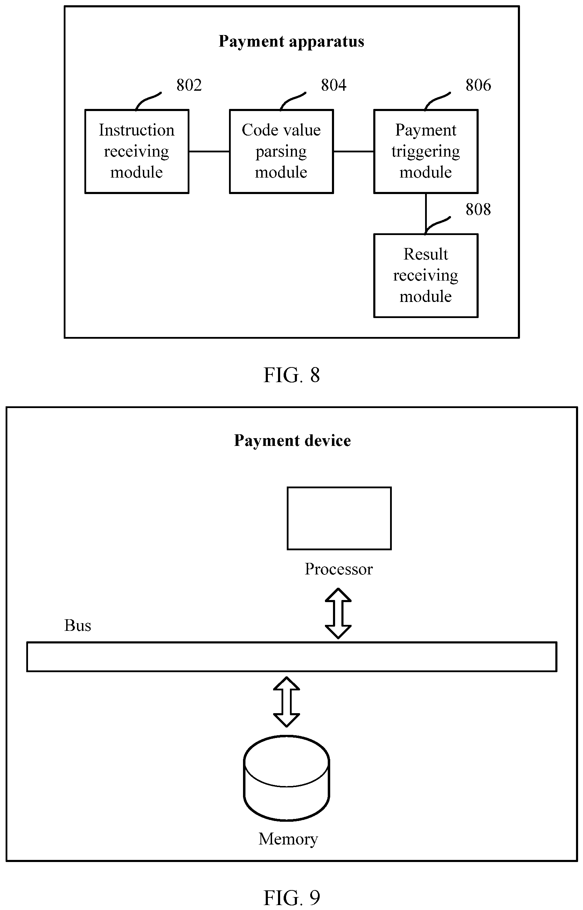

Based on the same idea, one or more embodiments of this specification further provide apparatuses and devices corresponding to the above-mentioned methods, as shown in FIG. 8 and FIG. 9. The apparatuses and the devices can correspondingly perform the above-mentioned methods and related optional solutions.

FIG. 8 is a schematic structural diagram illustrating a payment apparatus, according to one or more embodiments of this specification. The apparatus is applied to a client of a payment application, and the apparatus includes:
an instruction receiving module 802, configured to receive a wake-up instruction, where a manner of initiating the wake-up instruction includes: reading, by a mobile device in which the client is located, a short-range wireless communication tag of a payee to obtain a corresponding code value, sending the wake-up instruction to the client, and providing the code value;
a code value parsing module 804, configured to: obtain related information of the payee based on the code value in response to the wake-up instruction;
a payment triggering module 806, configured to: in a case in which current payment belongs to large payment, trigger, based on the related information, a server of the payment application to obtain a dynamic code of the payee and perform corresponding large payment processing based on the dynamic code of the payee; and
a result receiving module 808, configured to receive a payment result returned by the server.

Optionally, the short-range wireless communication tag includes: the dynamic code of the payee generated or applied for by the payee and dynamically updated and written into the short-range wireless communication tag; and
the payment triggering module 806 is configured to determine the dynamic code of the payee based on a result of reading the short-range wireless communication tag; and
interact with the server of the payment application based on the related information and the dynamic code of the payee, so the server obtains the dynamic code of the payee and performs corresponding large payment processing based on the dynamic code of the payee.

Optionally, the payment triggering module 806 is configured to initiate payment to the server of the payment application based on the related information, so the server generates or applies for a dynamic code from another service provider as the dynamic code of the payee, and gives a prompt to the client; and
receive corresponding confirmation of a payer on the client, and trigger, based on a result of the corresponding confirmation, the server to continue to perform corresponding large payment processing based on the dynamic code of the payee.

Optionally, the prompt contains a product personalized extension field corresponding to current large payment; and
the payment triggering module 806 is configured to receive a value assignment operation performed by the payer on the client for the product personalized extension field; and
confirm with the server based on the value-assigned product personalized extension field, so the server performs corresponding large payment processing based on the product personalized extension field;
where the extension relates to product reservation and/or product customization.

Optionally, the payment triggering module 806 is configured to: before triggering, based on the related information, the server of the payment application to obtain the dynamic code of the payee and perform corresponding large payment processing based on the dynamic code of the payee, display a payment amount input page; and
receive a large payment amount, not less than a specified amount threshold, inputted by a payer through the payment amount input page to establish that the current payment belongs to large payment.

Optionally, reading, by the mobile device in which the client is located, a short-range wireless communication tag of a payee specifically includes:
reading, by the mobile device in which the client is located, an amount to be paid written by the payee into the short-range wireless communication tag; and
the payment triggering module 806 is configured to obtain the amount to be paid determined by the mobile device by reading;
determine whether the received payment amount inputted by the payer is not less than the amount to be paid; and
if yes, initiate payment, limited by the amount to be paid, to the server of the payment application, so an actual payment amount of the payer for one or more times is equal to the amount to be paid.

Optionally, a proximity location of the short-range wireless communication tag further displays a collection code of the payee generated based on the code value.

Optionally, the mobile device is a wearable device.

Optionally, the wearable device includes a smart watch that does not have a camera supporting code scanning.

Optionally, the short-range wireless communication tag is an NFC tag.

FIG. 9 is a schematic structural diagram illustrating a payment device, according to one or more embodiments of this specification. The device is applied to a client of a payment application, and the device includes:
at least one processor; and
a memory communicatively connected to the at least one processor; where
the memory stores instructions executable by the at least one processor, and the instructions are executed by the at least one processor, to enable the at least one processor to:
receive a wake-up instruction, where a manner of initiating the wake-up instruction includes: reading, by a mobile device in which the client is located, a short-range wireless communication tag of a payee to obtain a corresponding code value, sending the wake-up instruction to the client, and providing the code value;
obtain related information of the payee based on the code value in response to the wake-up instruction;
in a case in which current payment belongs to large payment, trigger, based on the related information, a server of the payment application to obtain a dynamic code of the payee and perform corresponding large payment processing based on the dynamic code of the payee; and
receive a payment result returned by the server.

Based on the same idea, one or more embodiments of this specification further provide a non-volatile computer storage medium that stores computer executable instructions and that is applied to a client of a payment application, and the computer executable instructions are set to:
receive a wake-up instruction, where a manner of initiating the wake-up instruction includes: reading, by a mobile device in which the client is located, a short-range wireless communication tag of a payee to obtain a corresponding code value, sending the wake-up instruction to the client, and providing the code value;
obtain related information of the payee based on the code value in response to the wake-up instruction;
in a case in which current payment belongs to large payment, trigger, based on the related information, a server of the payment application to obtain a dynamic code of the payee and perform corresponding large payment processing based on the dynamic code of the payee; and
receive a payment result returned by the server.

In the 1990s, whether a technical improvement is a hardware improvement (for example, an improvement to a circuit structure, such as a diode, a transistor, or a switch) or a software improvement (an improvement to a method procedure) can be clearly distinguished. However, with development of technologies, improvement to many existing method procedures can be considered as direct improvement to hardware circuit structures. A designer usually programs an improved method procedure to a hardware circuit, to obtain a corresponding hardware circuit structure. Therefore, a method procedure can be improved by using a hardware entity module. For example, a programmable logic device (PLD) (for example, a field programmable gate array (FPGA)) is such an integrated circuit, and a logical function of the PLD is determined by a user through device programming. A designer autonomously performs programming to "integrate" a digital system onto a PLD, without requesting a chip manufacturer to design and manufacture a dedicated integrated circuit chip. In addition, at present, instead of manually manufacturing an integrated circuit chip, this type of programming is mostly implemented by using "logic compiler" software. The programming is similar to a software compiler used to develop and write a program. Original code needs to be written in a particular programming language for compilation. The language is referred to as a hardware description language (HDL). There are many HDLs, such as the Advanced Boolean Expression Language (ABEL), the Altera Hardware Description Language (AHDL), Confluence, the Cornell University Programming Language (CUPL), HDCal, the Java Hardware Description Language (JHDL), Lava, Lola, MyHDL, PALASM, and the Ruby Hardware Description Language (RHDL). The very-high-speed integrated circuit hardware description language (VHDL) and Verilog are most commonly used. It should also be clear to a person skilled in the art that a hardware circuit for implementing a logical method procedure can be easily obtained by performing slight logic programming on the method procedure by using the above-mentioned several hardware description languages and programming the method procedure into an integrated circuit.

A controller can be implemented by using any appropriate method. For example, the controller can be a microprocessor or a processor, or a computer readable medium that stores computer-readable program code (such as software or firmware) that can be executed by the microprocessor or the processor, a logic gate, a switch, an application-specific integrated circuit (ASIC), a programmable logic controller, or a built-in microprocessor. Examples of the controller include but are not limited to the following microprocessors: ARC 625D, Atmel AT91SAM, Microchip PIC18F26K20, and Silicone Labs C8051F320. A storage controller can also be implemented as a part of the control logic of the storage. A person skilled in the art also knows that, in addition to implementing the controller by using only computer-readable program code, logic programming can be performed on a method step, so the controller implements a same function in a form of a logic gate, a switch, an application-specific integrated circuit, a programmable logic controller, an embedded microcontroller, etc. Therefore, the controller can be considered as a hardware component, and an apparatus included in the controller and configured to implement various functions can also be considered as a structure in the hardware component. Or the apparatus configured to implement various functions can even be considered as both a software module implementing the method and a structure in the hardware component.

The system, apparatus, module, or unit illustrated in the previous embodiments can be implemented by using a computer chip or an entity, or can be implemented by using a product having a certain function. A typical implementation device is a computer. Specifically, the computer can be, for example, a personal computer, a laptop computer, a cellular phone, a camera phone, a smartphone, a personal digital assistant, a media player, a navigation device, an email device, a game console, a tablet computer, a wearable device, or a combination of any of these devices.

For ease of description, the apparatus above is described by dividing functions into various units. Certainly, when this specification is implemented, functions of the units can be implemented in one or more pieces of software and/or hardware.

A person skilled in the art should understand that an implementation of this specification can be provided as a method, a system, or a computer program product. Therefore, the embodiments of this specification can use a form of hardware only embodiments, software only embodiments, or embodiments with a combination of software and hardware. Moreover, some embodiments of this specification can use a form of a computer program product that is implemented on one or more computer-usable storage media (including but not limited to a disk memory, a CD-ROM, an optical memory, etc.) that include computer-usable program code.

This specification is described with reference to the flowcharts and/or block diagrams of the method, the device (system), and the computer program product according to some embodiments of this specification. It should be understood that computer program instructions can be used to implement each procedure and/or each block in the flowcharts and/or the block diagrams and a combination of a procedure and/or a block in the flowcharts and/or the block diagrams. These computer program instructions can be provided for a general-purpose computer, a dedicated computer, an embedded processor, or a processor of another programmable data processing device to generate a machine, so the instructions executed by the computer or the processor of the another programmable data processing device generate an apparatus for implementing a specific function in one or more processes in the flowcharts and/or in one or more blocks in the block diagrams.

It is also worthwhile to note that terms "include", "contain" or any other variant is intended to cover non-exclusive inclusion, so processes, methods, products or devices that include a series of elements include not only those elements but also other elements that are not explicitly listed, or elements inherent in such processes, methods, products or devices. Without more constraints, an element preceded by "includes a ..." does not preclude the existence of additional identical elements in the process, method, product or device that includes the element.

This specification can be described in the general context of computer-executable instructions, for example, a program module. Usually, the program module includes a routine, a program, an object, a component, a data structure, etc. executing a specific task or implementing a specific abstract data type. This specification can alternatively be practiced in distributed computing environments in which tasks are performed by remote processing devices that are connected through a communication network. In the distributed computing environments, the program module can be located in both local and remote computer storage media including storage devices.

The embodiments in this specification are described in a progressive way. For the same or similar parts of the embodiments, references can be made to the embodiments. Each embodiment focuses on a difference from other embodiments. Especially, an apparatus implementation, a device implementation, a non-volatile computer storage medium implementation are similar to a method implementation, and therefore are described briefly. For related parts, references can be made to the descriptions in the method implementation.

Specific embodiments of this specification are described above. Other embodiments fall within the scope of the appended claims. In some situations, the actions or steps described in the claims can be performed in an order different from the order in the embodiments and the desired results can still be achieved. In addition, the process depicted in the accompanying drawings does not necessarily need a particular execution order to achieve the desired results. In some implementations, multi-tasking and concurrent processing is feasible or may be advantageous.

The previous descriptions are merely one or more implementations of this specification, and are not intended to limit this specification. A person skilled in the art knows that one or more embodiments of this specification can have various modifications and changes. Any modification, equivalent replacement, improvement, etc. made within the spirit and principle of one or more embodiments of this specification shall fall within the scope of the claims of this specification.

## Claims

1. A payment method, applied to a client of a payment application, wherein the method comprises:
receiving a wake-up instruction, wherein a manner of initiating the wake-up instruction comprises: reading, by a mobile device in which the client is located, a short-range wireless communication tag of a payee to obtain a corresponding code value, sending the wake-up instruction to the client, and providing the code value;
obtaining related information of the payee based on the code value in response to the wake-up instruction;
in a case in which current payment belongs to large payment, triggering, based on the related information, a server of the payment application to obtain a dynamic code of the payee and perform corresponding large payment processing based on the dynamic code of the payee; and
receiving a payment result returned by the server.

2. The method according to claim 1, wherein the short-range wireless communication tag comprises: the dynamic code of the payee generated or applied for by the payee and dynamically updated and written into the short-range wireless communication tag; and
triggering, based on the related information, the server of the payment application to obtain a dynamic code of the payee and perform corresponding large payment processing based on the dynamic code of the payee specifically comprises:
determining the dynamic code of the payee based on a result of reading the short-range wireless communication tag; and
interacting with the server of the payment application based on the related information and the dynamic code of the payee, so the server obtains the dynamic code of the payee and performs corresponding large payment processing based on the dynamic code of the payee.

3. The method according to claim 1, wherein triggering, based on the related information, the server of the payment application to obtain a dynamic code of the payee and perform corresponding large payment processing based on the dynamic code of the payee specifically comprises:
initiating payment to the server of the payment application based on the related information, so the server generates or applies for a dynamic code from another service provider as the dynamic code of the payee, and gives a prompt to the client; and
receiving corresponding confirmation of a payer on the client, and triggering, based on a result of the corresponding confirmation, the server to continue to perform corresponding large payment processing based on the dynamic code of the payee.

4. The method according to claim 3, wherein the prompt contains a product personalized extension field corresponding to current large payment; and
receiving corresponding confirmation of the payer on the client specifically comprises:
receiving a value assignment operation performed by the payer on the client for the product personalized extension field; and
confirming with the server based on the value-assigned product personalized extension field, so the server performs corresponding large payment processing based on the product personalized extension field;
wherein the extension relates to product reservation and/or product customization.

5. The method according to claim 1, wherein before triggering, based on the related information, the server of the payment application to obtain a dynamic code of the payee and perform corresponding large payment processing based on the dynamic code of the payee, the method further comprises:
displaying a payment amount input page; and
receiving a large payment amount, not less than a specified amount threshold, inputted by a payer through the payment amount input page to establish that the current payment belongs to large payment.

6. The method according to claim 5, wherein reading, by the mobile device in which the client is located, a short-range wireless communication tag of a payee specifically comprises:
reading, by the mobile device in which the client is located, an amount to be paid written by the payee into the short-range wireless communication tag; and
triggering the server of the payment application to obtain a dynamic code of the payee and perform corresponding large payment processing based on the dynamic code of the payee specifically comprises:
obtaining the amount to be paid determined by the mobile device by reading;
determining whether the received payment amount inputted by the payer is not less than the amount to be paid; and
if yes, initiating payment, limited by the amount to be paid, to the server of the payment application, so an actual payment amount of the payer for one or more times is equal to the amount to be paid.

7. The method according to claim 1, wherein a proximity location of the short-range wireless communication tag further displays a collection code of the payee generated based on the code value.

8. The method according to any one of claims 1 to 7, wherein the mobile device is a wearable device.

9. The method according to claim 8, wherein the wearable device comprises a smart watch that does not have a camera supporting code scanning.

10. The method according to any one of claims 1 to 7, wherein the short-range wireless communication tag is an NFC tag.

11. A payment device, applied to a client of a payment application, wherein the device comprises:
at least one processor; and
a memory communicatively connected to the at least one processor; wherein
the memory stores instructions executable by the at least one processor, and the instructions are executed by the at least one processor, to enable the at least one processor to implement the method of any one of claims 1 to 10.

12. A computer-readable storage medium, wherein the computer-readable storage medium stores a computer program, which when executed by a processor causes the processor to implement the method of any one of claims 1 to 10.

13. A computer program comprising computer executable instructions which when executed by a processor cause the processor to implement the method of any one of claims 1 to 10.14. An apparatus comprising means for performing the steps of the method of any one of claims 1 to 10.
